# EUROPEAN PATENT SPECIFICATION

(11) **EP 2 762 789 B1**
(45) Date of publication and mention of the grant of the patent: **16.01.2019**
(21) Application number: 14154046.8
(22) Date of filing: 05.02.2014
(51) Int. Cl.: F24D 11/02, F24F 3/10, F24F 5/00, F24D 3/08

(54) **Thermal integrated multi-source plant**
Anlage mit mehrfachen integrierten Wärmequellen
Installation avec multiples sources de chaleur intégrées

(30) Priority: 05.02.2013 IT MI20130157
(43) Date of publication of application: 06.08.2014
(73) Proprietor: Riello S.p.A., Legnago (IT)
(72) Inventor: Casiraghi, Stefano, 23875 OSNAGO (IT); Perer, Umberto, 31030 ARCADE (IT)
(74) Representative: Andreotti, Erika

(56) References cited:
- WO-A2-2006/101405
- GB-A- 2 468 706

## Description

The present invention relates to a thermal integrated multi-source plant. In particular, the present invention relates to a thermal integrated multi-source plant configured to heat sanitary water and to air condition the domestic environment.

Thermal integrated plants are known, which are provided with a plurality of thermal sources configured to heat water intended to supply a circuit for heating sanitary water and a circuit for heating the domestic environment. A first kind of thermal integrated plant is disclosed in document GB 2468706 A, while a second kind of thermal integrated plant is disclosed in document WO 2006/101405 A2.

Nevertheless, such thermal integrated plants are not capable of also cooling the water in order to cool the domestic environment during the summer period.

Indeed, cooling a fluid is not normally contemplated in known thermal integrated multi-source plants. For example, document VR2007A00046 describes a thermal integrated plant in which a solar panel, a heat pump and a boiler contribute to heating the water contained in a storage tank. The heated water in the tank is supplied as needed to a domestic heating circuit and is exploited to heat the sanitary water by means of a heat exchanger.

It is therefore one of the objects of the present invention to make a thermal integrated multi-source plant capable of heating the domestic environment and the sanitary water in an efficient manner, and capable at the same time of cooling the domestic environment as needed, without requiring the addition of further components.

In particular, it is one of the objects of the present invention to exploit all thermal sources so as to minimize consumptions and polluting emissions and ensure adequate air-conditioning of the domestic environment both in the winter and in the summer period.

In accordance with such objects, the present invention relates to a thermal integrated multi-source plant as claimed in claim 1.

Thereby, the plant according to the present invention is capable of ensuring adequate air-conditioning of the domestic environment both during the summer and the winter period.

The presence of a second tank capable of storing hot or cold fluid according to needs ensures the requests to heat the sanitary water and at the same time air condition the domestic environment, can be met in a simple and efficient manner.

It is a further object of the present invention to provide a method for operating a thermal integrated multi-source plant. In accordance with such objects, the present invention relates to a method for operating a thermal integrated multi-source plant according to claim 17.

Further features and advantages of the present invention will become more apparent from the following description of a non-limiting embodiment thereof, with reference to the figures of the accompanying drawings, in which:
- figure 1 is a diagrammatic view, with parts removed for clarity, of the thermal integrated multi-source plant according to the present invention, in a first operating configuration;
- figure 2 is a diagrammatic view, with parts removed for clarity, of the thermal integrated multi-source plant according to the present invention, in a second operating configuration;
- figure 3 is a diagrammatic view, with parts removed for clarity, of the thermal integrated multi-source plant according to a second embodiment according to the present invention;
- figure 4 is a diagrammatic view, with parts removed for clarity, of the thermal integrated multi-source plant according to a third embodiment according to the present invention;
- figure 5 is a diagrammatic view, with parts removed for clarity, of the thermal integrated multi-source plant according to a fourth embodiment according to the present invention;
- figure 6 is a diagrammatic view, with parts removed for clarity, of the thermal integrated multi-source plant according to a fifth embodiment according to the present invention;
- figure 7 is a diagrammatic view, with parts removed for clarity, of the thermal integrated multi-source plant according to a sixth embodiment according to the present invention;
- figure 8 is a diagrammatic view, with parts removed for clarity, of the thermal integrated multi-source plant according to a seventh embodiment according to the present invention.

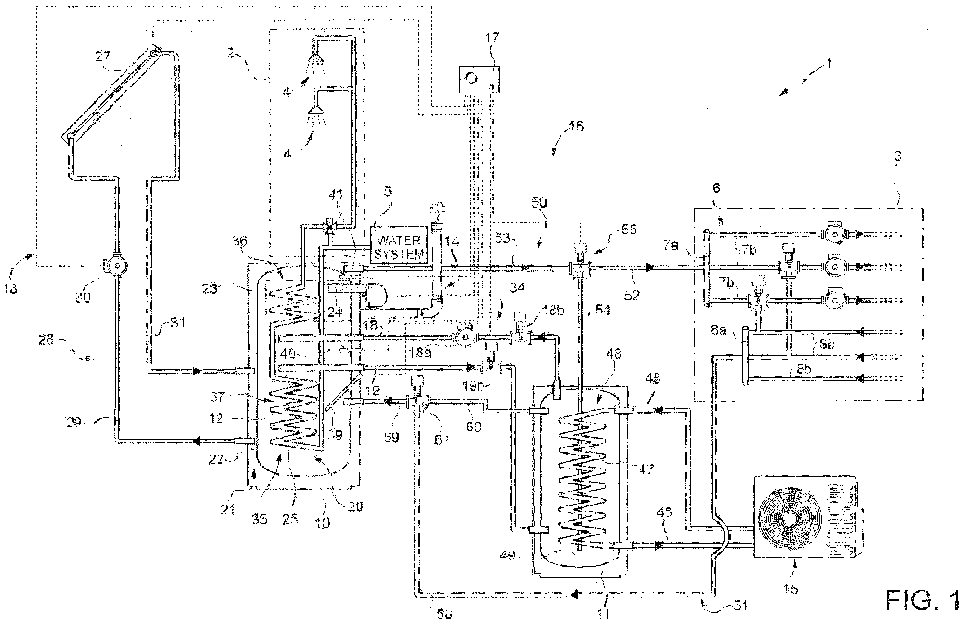

Numeral 1 in figure 1 indicates a thermal integrated multi-source plant according to the present invention, which is connected to a sanitary water plant 2 and to a domestic air-conditioning plant 3.

The sanitary water plant 2 supplies the domestic utilities 4 (diagrammatically shown in the accompanying drawings) with sanitary water provided by the water system 5 (diagrammatically shown in the accompanying drawings). The sanitary water is heated, when needed, by plant 1 according to the present invention, as seen in detail below.

The air-conditioning plant 3 comprises a closed circuit 6 provided with a delivery manifold 7a, a plurality of delivery conduits 7b which supply the fluid provided by plant 1 to respective heat exchange devices (not shown), a plurality of return conduits 8b in which the fluid flows after the heat exchange and a return manifold 8a.

Preferably, the delivery conduits 7b supply high temperature heat exchange devices (central heating plants, fan coils, towel heaters) and low temperature heat exchange devices (floor plants). In the non-limiting embodiment herein described and illustrated, one of the three conduits 7b supplies the high temperature heat exchange devices and two of the three delivery conduits 7b supply the low temperature heat exchange devices (floor plants).

Preferably, the floor plant supplied by the low temperature delivery conduit 7b is provided with a mixer valve.

Plant 1 comprises a first tank 10 for storing a first fluid, a second tank 11 for storing a second fluid, a heat exchanger 12 configured to transfer thermal energy from the first fluid to the sanitary water of the sanitary plant 2, a solar installation 13 associated with the first tank 10, a boiler 14 associated with the first tank 10, a heat pump 15 associated with the first tank 10, an air-conditioning circuit 16, which connects the first tank 10 and the second tank 11 to the air-conditioning plant 3, and a control unit 17.

Preferably, the first fluid and the second fluid are water.

Plant 1 preferably comprises a containment structure (not shown in the accompanying drawings), which contains all the above-listed components of plant 1.

The solar installation 13 and boiler 14 are configured to heat the first fluid in the first tank 10, while the heat pump 15 is configured to selectively heat or cool the second fluid under the control of the control unit 17.

Plant 1 is also equipped with a connecting circuit 34 comprising a delivery conduit 18, which is provided with a pump 18a configured to send the second fluid of the second tank 11 to the first tank 10 and with a valve 18b, and a return conduit 19 configured to send the first fluid from the first tank 10 to the second tank 11 and provided with a valve 19b.

Pump 18a, valve 18b and valve 19b are controlled by the control unit 17.

The first tank 10 is preferably a double chamber tank provided with an inner chamber 20 in which the first fluid is arranged, and with an outer chamber 21, which surrounds the inner chamber 20 to define a gap 22.

The inner chamber 20 accommodates the heat exchanger 12 and a casing 23, in which a burner 24 of boiler 14 is arranged.

The heat exchanger 12 comprises a coil 25, in which the sanitary water intended for the sanitary plant 2 flows. The heat exchanger 12 is immersed in the first fluid and has a portion of coil 25 accommodated in casing 23 (indicated with a dotted line in the accompanying drawings).

A variant (not shown) provides for exchanger 12 to be arranged outside the inner chamber 20.

Preferably, boiler 14 is a fossil fuel boiler, for example gas.

When it is active, burner 24 heats the first fluid and contributes to also heating the sanitary water circulating in the heat exchanger 12.

The activation of boiler 14 is controlled by the control unit 17, as will be seen in detail below.

The solar installation 13 comprises at least a solar panel 27 and a closed circuit 28, which connects the solar panel 27 to the first tank 10.

In the non-limiting embodiment herein described and illustrated, the closed circuit 28 is connected to the outer chamber 21. A variant (not shown) provides for the closed circuit 28 to be connected to the inner chamber 20.

In particular, the closed circuit 28 comprises a delivery conduit 29, provided with a pump 30 adapted to draw the fluid in the outer chamber 21 and send it to the solar panel 27, and a return conduit 31, which supplies the fluid heated by the solar panel 27 to the outer chamber 21.

Pump 30 is preferably controlled by the control unit 17.

The fluid circulating in the outer chamber 21 contributes to heating the first fluid in the inner chamber 20.

In the non-limiting embodiment herein described and illustrated, the solar installation 13 is coupled to the first tank 10 so as to heat the first fluid accommodated in a bottom portion 35 of the first tank 10. Boiler 14 is instead coupled to the first tank so as to heat the first fluid arranged in a top portion 36 of the first tank 10. Thereby, boiler 14 acts on the first fluid already partly heated by the solar installation 13.

Preferably, the delivery conduit 18 faces onto an intermediate portion 37 of the first tank 10 arranged between the bottom portion 35 and the top portion 36.

Thereby, the second fluid is let in so as to contribute to the temperature increase already performed by the solar installation 13, and boiler 14 acts on the first fluid already partly heated by the solar installation 13 and, indirectly, by the heat pump 15.

The bottom portion 35 defines the "cold area" of the first tank 10, while the top portion 36 defines the "hot area" of the first tank 10.

Between the bottom portion 35 and the drawing portion of the return conduit 19, there is arranged a temperature sensor 39 configured to detect the temperature of the first fluid in the inner chamber 20 after the heating by the solar installation 13. A temperature sensor 40 is arranged between the drawing point of the return conduit 19 and the inlet point of the delivery conduit 18. In the top portion 36, substantially downstream of casing 24, there is arranged a temperature sensor 41 configured to detect the temperature of the first fluid in the inner chamber 20 after any heating by boiler 14.

The temperature sensor 39, the temperature sensor 40 and the temperature sensor 41 send the data acquired to the control unit 17. The control unit 17 processes the temperature data acquired and selectively activates, in the heating mode, the solar installation 13 by activating pump 30, boiler 14 by activating burner 23, and the heat pump 15, to ensure that the first fluid is heated so as to meet the requests of the user.

The second tank 11 has a single chamber and is coupled to the heat pump 15 so that the heat pump 15 may heat or cool the second fluid.

In the non-limiting embodiment herein described and illustrated, the heat pump 15 is connected to the second tank 11 by means of a hot conduit 45, a cold conduit 46 and a heat exchanger 47, arranged between the hot conduit 45 and the cold conduit 46. The hot conduit 45 is connected to a top portion 48 of the second tank 11, while the cold conduit 46 is connected to a bottom portion 49 of the second tank 11. The heat exchanger 47 is preferably accommodated in the second tank 11 and is immersed in the second fluid. The bottom portion 49 defines the "cold area" of the second tank 11, while the top portion 48 defines the "hot area" of the second tank 11.

The heat exchanger 47, the hot conduit 45, the cold conduit 46 and the heat pump 15 define a circuit in which a vector fluid circulates, which releases or acquires thermal energy in the second tank 11 according to the operating mode of the heat pump 15.

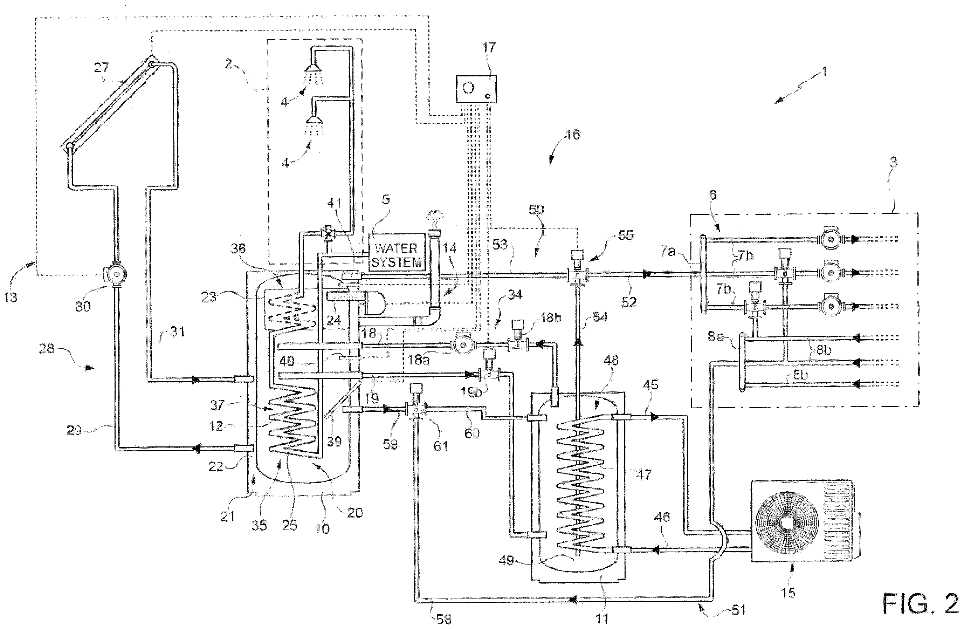

The heat pump 15 may indeed operate in two modes under the control of the control unit 17: a heating mode (shown in figure 1) and a cooling mode (shown in figure 2) .

If the heat pump 15 operates in heating mode, the vector fluid flows in the hot conduit 45 from the heat pump 15 to the second tank 11 (see arrows indicating the flow of fluid), releases thermal energy to the second fluid and flows in the cold conduit 46 from the second tank 11 to the heat pump 15.

If the heat pump 15 operates in cooling mode (figure 2), the vector fluid flows in the cold conduit 46 from the heat pump 15 to the second tank 11 (see arrows indicating the flow of fluid), acquires thermal energy from the second fluid and flows in the hot conduit 45 from the second tank 11 to the heat pump 15.

A variant (not shown) of the present invention provides for the heat pump 15 to be supplied by one or more photovoltaic panels.

In the non-limiting embodiment herein described and illustrated, the heat exchanger 47 is integrated in plant 1, and in particular in tank 11.

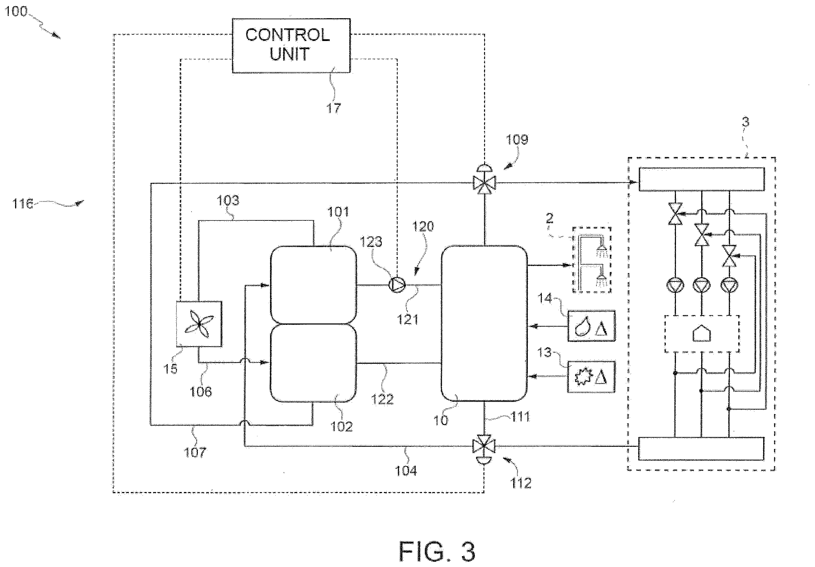

One variant (shown in figures 3-7) provides for the exchanger/evaporator/condenser with circulator to be integrated in the heat pump 15.

The air-conditioning circuit 16 connects the first tank 10 and the second tank 11 to the air-conditioning plant 3.

In particular, the air-conditioning circuit comprises a delivery line 50 and a return line 51.

The delivery line 50 comprises a main conduit 52 provided with a first branch 53, which connects the main conduit 52 to the first tank 10, and with a second branch 54, which connects the main conduit 53 to the second tank 11.

The main conduit 52 is connected to the first branch 53 and to the second branch 54 by means of a regulating valve 55, preferably three-way, which is controlled by the control unit 17 to selectively supply the first fluid and/or the second fluid to the air-conditioning plant 3.

In detail, the first branch 53 is connected to the first tank 10 so as to draw the first fluid from the top portion 36 downstream of casing 24.

The second branch 54 is connected to the second tank 11 so as to draw the second fluid from the bottom portion 49.

One variant (not shown) provides for the second branch 54 to be connected to a further branch equipped with regulating means and connected to the second tank 11 so as to draw the second fluid from the top portion 48; thereby, the heat pump 15 may contribute directly to heating the fluid to be supplied to the air-conditioning plant 3 without necessarily having to flow through the first tank 10.

The return line 51 connects the air-conditioning plant 3 with the first tank 10 and with the second tank 11 and comprises a main conduit 58 provided with a first branch 59, which connects the main conduit 58 to the first tank 10, and with a second branch 60, which connects the main conduit 53 to the second tank 11.

The main conduit 58 is connected to the first branch 59 and to the second branch 60 by means of a regulating valve 61, preferably three-way, which is controlled by the control unit 17 to selectively supply the first fluid provided by the circuit supplying the first tank 10 or the second tank 11.

Preferably, the first branch 59 flows into the bottom portion 35 of the first tank 10, while the second branch 60 flows into the top portion 48 of the second tank 11.

The control unit 17 is configured to regulate the components of plant 1 so as to adequately heat the sanitary water of the sanitary plant 2 and adequately cool or heat the fluid to be supplied to the air-conditioning plant 3, thus minimizing energy consumptions and polluting emissions.

In particular, during the winter period (configuration in figure 1) and during the summer period (configuration in figure 2), the control unit 17 regulates the contribution of heat to the first tank 10 so as to adequately heat the sanitary water of the sanitary plant 2. Therefore, the control unit 17 is configured to activate the second solar installation 13 and to possibly activate boiler 14 should the temperature detected by the temperature sensor 41 be less than the temperature requested by the sanitary plant 2.

The control unit 17 eventually activates the heat pump 15 in heating mode and activates pump 18a to send the second fluid heated by the heat pump 15 to the first tank 10 and contribute to heating the first fluid in the first tank 10.

During the winter period, the control unit 17 regulates the contribution of heat both to the first tank 10 and to the second tank 11 so as to supply the air-conditioning plant 3 with a fluid at the desired temperature.

In particular, the control unit 17 activates the solar installation 13 in sequence (by activating pump 30) when the difference between the temperature detected in the solar panel 27 and the temperature detected by the sensor 39 is greater than a first threshold value.

Should the temperature of the sensor 40 be less than a second threshold value, the control unit 17 activates the heat pump 15 in heating mode.

In this latter case, the control unit 17 also activates the pumps 18a to supply the second hot fluid to the first tank 10 and increase the temperature of the first fluid. Furthermore, the control unit 17 regulates valve 55 so that the fluid provided by the first tank 10 reaches the air-conditioning plant 3 by means of the first branch 53 and the main conduit 52, and also regulates valve 61 so that the fluid returning from the air-conditioning plant 3 is released into the first tank 10 through the main conduit 58 and the first branch 59.

If the heating action of the heat pump 15 and of the solar installation 13 is not sufficient, the control unit 17 activates boiler 14. In particular, boiler 14 is activated when the temperature of the sensor 41 is less than a third threshold value.

Finally, the control unit 17 is configured to prevent the activation of the heat pump 15 when the outside temperature is less than a preset value, generally called the "break even point".

During the summer period (configuration in figure 2), the control unit 17 instead regulates cooling the second fluid in the second tank 11. In particular, the control unit 17 activates the heat pump 15 in cooling mode, opens valve 55 so that branch 54 is in communication with the main conduit 52 and regulates valve 61 so that the second branch 61 is in communication with conduit 58 alone and the fluid returning from the air-conditioning plant 3 is released into the second tank 11.

Figure 3 diagrammatically illustrates a thermal integrated multi-source plant 100 in accordance with a second embodiment of the present invention.

The same numbers used in figures 1 and 2 are used hereinafter to indicate similar parts.

Plant 100 is connected to a sanitary water plant 2 and to an air-conditioning plant 3 and differs from plant 1 substantially in that the second tank 11 is replaced by a hot tank 101 and by a cold tank 102.

The hot tank 101, the cold tank 102 and tank 10 are connected to the air-conditioning plant 3 through an air-conditioning circuit 116.

In particular, the hot tank 101 is connected to the heat pump 15 by means of a first hot conduit 103, and to the air-conditioning plant 3 by means of a second hot conduit 104, while the cold tank 102 is connected to the heat pump 15 by means of a first cold conduit 106, and to the air-conditioning plant 3 by means of a second cold conduit 107.

The second cold conduit 107 is provided with a branch 108, which connects the cold conduit 107 with the first tank. At such a branch, the cold conduit 107 is provided with a cold control valve 109, preferably of the three-way type, which, on the basis of a signal given by the control device 17, regulates the flow of fluid between the air-conditioning plant 3, the cold tank 102 and the first tank 10.

The second hot conduit 104 is provided with a branch 111, which connects the hot conduit 104 with the first tank 10. At such a branch, the hot conduit 104 is provided with a hot control valve 112, preferably of the three-way type, which, on the basis of a signal given by the control device 17, regulates the flow of fluid between the air-conditioning plant 3, the hot tank 101 and the first tank 10.

The first tank 10 is associated with the solar installation 13, boiler 14 and the heat pump 15. Such thermal sources are configured to heat the fluid contained in the first tank 10. Plant 100 further comprises a heat exchanger (not shown in figure 3 for simplicity) configured to transfer thermal energy from the fluid of the first tank 10 to the sanitary water of the sanitary plant 2.

Furthermore, there is a connecting circuit 120, which comprises a delivery conduit 121 that connects the hot tank 101 to the first tank 10, and a return conduit 122, that connects the first tank 10 to the cold tank 102.

The delivery conduit 121 comprises a delivery pump 123, which can be selectively activated on the basis of a control signal given by the control unit 17.

Due to the presence of the connecting circuit 120, the hot fluid stored in the hot tank 101 may be sent to the first tank 10 to contribute to increasing the temperature of the fluid in the first tank 10 and, therefore, to contribute to heating the sanitary water of the sanitary plant 2.

As already described above, the heat pump 15 may operate in two modes under the control of the control unit 17: a heating mode and a cooling mode.

If the heat pump 15 operates in cooling mode (configuration shown figure 3), the cold fluid provided by the heat pump 15 flows from the heat pump 15 to the second tank 11 (see arrows indicating the flow of fluid) through the first cold conduit 106 and is then supplied to the air-conditioning plant 3 through the second cold conduit 107. The heat pump 15 operates in cooling mode when there is a request to cool the domestic environment, tendentially during the summer. In this case, valve 109 will be configured so as to prevent the connection between the first tank 10 and the air-conditioning plant 3 and to supply the fluid provided by the cold tank 102 alone to the air-conditioning plant 3.

If the heat pump 15 operates in heating mode (option not shown and feasible both in the summer and winter period), the hot fluid provided by the heat pump 15 flows from the heat pump 15 to the hot tank 101 through the first hot conduit 103 and is selectively supplied to the air-conditioning plant 3 through the second hot conduit 104 and/or to the first tank 10 through the delivery conduit 111.

In detail, during the winter, if the heat pump 15 operates in heating mode, the fluid stored in the hot tank 101 may be supplied to the air-conditioning plant 3 through the second hot conduit 104 and/or to the first tank 10 to also contribute to heating the sanitary water of the sanitary plant 2. During the summer, the fluid stored in the hot tank 101 is sent to the first tank 10 to contribute to also heating the sanitary water of the sanitary plant 2, while the cold fluid stored in the cold tank 102 is sent to the air-conditioning plant 3.

The presence of a hot tank 101 and of a cold tank 102 allows the architecture of the hydraulic distribution circuit to be simplified.

Plant 100 preferably comprises a containment structure (not shown in the accompanying drawings), which contains all the above-described components of plant 100.

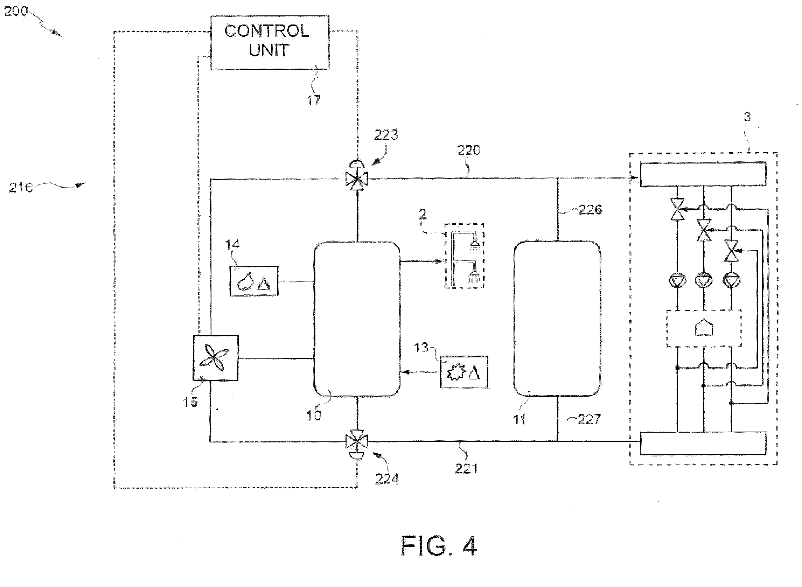

Figure 4 diagrammatically illustrates a thermal integrated multi-source plant 200 in accordance with a third embodiment of the present invention.

The same numbers used in figures 1 and 2 are used hereinafter to indicate similar parts.

Plant 200 is connected to a sanitary water plant 2 and to a domestic air-conditioning plant 3 and is characterized by a particular and advantageous relevant arrangement of the thermal sources 13, 14 and 15, of the first tank 10 and of the second tank 11.

The first tank 10 is associated with the solar installation 13, boiler 14 and the heat pump 15. Such thermal sources are configured to heat the fluid contained in the first tank 10. Plant 200 further comprises a heat exchanger (not shown for simplicity in figure 4) configured to transfer thermal energy from the fluid of the first tank 10 to the sanitary water of the sanitary plant 2.

The heat pump 15, the first tank 10 and the second tank 11 are connected to the air-conditioning plant 3 through an air-conditioning circuit 216.

In particular, the heat pump 15 is connected to the air-conditioning plant 3 by means of a delivery conduit 220 and a return conduit 221.

The delivery conduit 220 is connected with the first tank 10 and with the second tank 11 and is provided with a regulating valve 223, which, on the basis of a signal given by the control unit 17, regulates the flow of fluid between the air-conditioning plant 3, the first tank 10 and the heat pump 15. During the summer period (cooling mode), the valves 223 and 224 are regulated so as to exclude the supply of the hot tank 10 and to supply the air-conditioning plant 3 alone.

The second tank 11 is arranged substantially parallel to the first tank 10 and the air-conditioning plant 3 and communicates with the delivery conduit 220 and with the return conduit 221. In particular, the second tank 11 is connected to the delivery conduit 220 and to the return conduit 221, respectively, by means of a duct 226 and a duct 227.

The second tank 11 is therefore arranged so as to operate as a by-pass of the air-conditioning plant 3 should the air-conditioning plant 3 have received the quantity of hot/cold fluid requested.

Similarly to that described for plant 1, the heat pump 15 may operate in two modes under the control of the control unit 17: a heating mode and a cooling mode.

If the heat pump 15 operates in heating mode (configuration shown in figure 4), the hot fluid provided by the heat pump 15 flows from the heat pump 15 to the first tank 10 and may be selectively supplied to the air-conditioning plant 3 through the delivery conduit 220 or to the second tank 11 should the request be met of the air-conditioning plant 3 (by-pass function).

Therefore, in the heating mode, the heat pump 15 may directly supply the air-conditioning plant 3 with hot fluid and heat the fluid in the first tank 10 (winter configuration shown in figure 4) or may heat the fluid in the first tank 10 alone to contribute to heating the sanitary water during the summer period.

Preferably, the heat pump 15 is activated in heating mode when the fluid provided by the first tank 10 is not sufficiently hot to meet the air-conditioning and/or heating needs of the sanitary water, similarly to that described for the first embodiment.

If the heat pump 15 operates in cooling mode, the cold fluid provided by the heat pump 15 flows from the heat pump 15 to air-conditioning plant 3 or to the second tank 11 should the air-conditioning plant 3 not request other cold fluid. The heat pump 15 operates in cooling mode when there is a request to cool the domestic environment, tendentially during the summer.

In this case, the regulating valve 224 is configured so as to prevent the connection between the first tank 10 and the air-conditioning plant 3 and to supply the fluid provided by the heat pump 15 alone to the air-conditioning plant 3.

Advantageously, the heat pump 15 directly supplies the air-conditioning plant 3 both in heating mode and in cooling mode. This increments the efficiency of plant 200 because the losses are decreased due to storage in the second tank 11. The second tank 11 is indeed used only when there is a need to store excess hot or cold fluid.

One variant (not shown) of plant 200 provides for the sanitary plant 2 to be connected in series to boiler 14 and not directly to the first tank 10. In such a case, boiler 14 receives, from the first tank 10, the fluid heated by the solar installation 13 and possibly by the heat pump 15. Thereby, boiler 14 is activated only when the fluid provided by the first tank 10 is not sufficiently hot to meet the needs of the sanitary plant 2.

Plant 200 preferably comprises a containment structure (not shown in the accompanying drawings), which contains all the above-described components of plant 200.

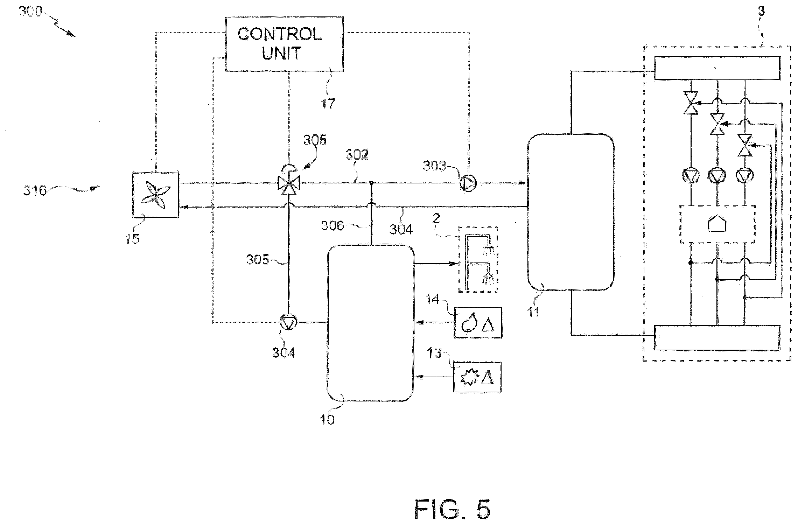

Figure 5 diagrammatically illustrates a thermal integrated multi-source plant 300 in accordance with a fourth embodiment of the present invention. Such an embodiment is particularly advisable when the heat pump 15 is of the "split" type, in which the exchanger/evaporator assembly is separate from the external unit.

The same numbers used in figures 1 and 2 are used hereinafter to indicate similar parts.

Plant 300 is connected to a sanitary water plant 2 and to a domestic air-conditioning plant 3 and is characterized by a particular and advantageous relevant arrangement of the thermal sources 13, 14 and 15, of the first tank 10 and of the second tank 11.

The first tank 10 is associated with the solar installation 13, boiler 14 and heat pump 15. Such thermal sources are configured to heat the fluid contained in the first tank 10. Plant 300 further comprises a heat exchanger (not shown for simplicity in figure 5) configured to transfer thermal energy from the fluid of the first tank 10 to the sanitary water of the sanitary plant 2.

The second tank 11 receives the fluid provided by the heat pump 15 and/or by the first tank 10 and is connected to the air-conditioning plant 3 through an air-conditioning circuit 316 to supply hot/cold fluid depending on the air-conditioning needs.

In particular, the heat pump 15 is connected to the second tank 11 by means of a delivery conduit 302, which is provided with a delivery pump 303, and by means of a return conduit 304.

The delivery conduit 302 is provided with a branch 305, which supplies the fluid that flows in the delivery conduit 302 to the first tank 10, and with a branch 306 which supplies the fluid of the first tank 10 to the delivery conduit 302.

The delivery conduit 302 is provided with a regulating valve 305, which, on the basis of a signal given by the control unit 17, regulates the flow of fluid between the heat pump 15, the first tank 10 and the second tank 11.

The second tank 11 may therefore be arranged in series to the first tank 10. Thereby, the fluid provided by the first tank 10 is to inevitably cross the second tank 11 to reach the air-conditioning plant 3.

Similarly to that described for plant 1, the heat pump 15 may operate in two modes under the control of the control unit 17: a heating mode and a cooling mode.

If the heat pump 15 operates in cooling mode, the fluid provided by the heat pump 15 flows to the second tank 11 (see arrows indicating the flow of fluid) and then to the air-conditioning plant 3. While the heat pump operates in cooling mode, the solar installation 13 and boiler 14 may heat the fluid of the first tank 10 and meet the heating needs of the sanitary plant 2.

If the heat pump 15 operates in heating mode, the fluid provided by the heat pump 15 may flow to the second tank 11 (to participate in heating the fluid for the air-conditioning plant 3) and/or to the first tank 10 (to participate in heating the fluid for the sanitary plant 2) depending on the position of the regulating valve 305.

Generally, the heat pump 15 operates in heating mode during the winter period. Nevertheless, the configuration of plant 300 allows the heat pump 15 to operate simultaneously in heating mode also in the summer to participate in heating the fluid for the sanitary plant 2. At times such a situation is particularly efficient in terms of energy consumptions because it allows avoiding boiler 14 to be switched on when the heating action determined by the solar installation 13 is slightly below the level requested.

Plant 300 preferably comprises a containment structure (not shown in the accompanying drawings), which contains all the above-described components of plant 300.

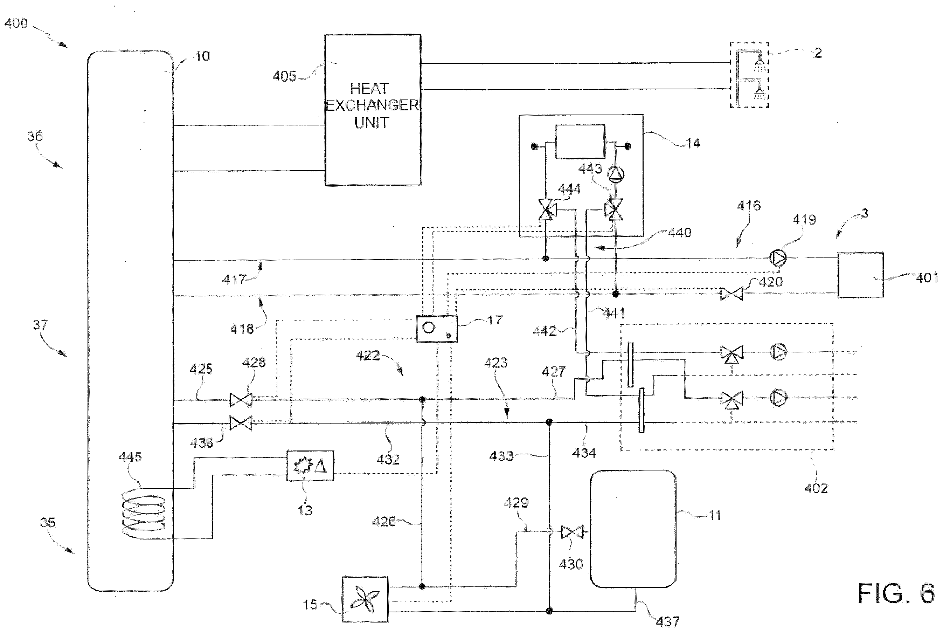

Figure 6 diagrammatically illustrates a thermal integrated multi-source plant 400 in accordance with a fifth embodiment of the present invention.

The same numbers used in figures 1 and 2 are used hereinafter to indicate similar parts.

Plant 400 is connected to a sanitary water plant 2 and to a domestic air-conditioning plant 3 and is characterized by a particular and advantageous relevant arrangement of the thermal sources 13, 14 and 15, of the first tank 10 and of the second tank 11.

In the embodiment shown in figure 6, the air-conditioning plant 3 is diagrammatically depicted and is divided into a high temperature portion 401 and a low temperature portion 402.

The high temperature portion 401 comprises a direct circuit which supplies high temperature heat exchange devices.

The low temperature portion 402 comprises a mixed circuit which supplies low temperature devices.

Preferably, the low temperature portion 402 is also intended to cool and is insulated to limit the formation of condensation during summer operation.

The first tank 10 is associated with the solar installation 13, boiler 14 and the heat pump 15. Such thermal sources are configured to heat the first fluid contained in the first tank 10.

Similarly to that described above, the solar installation 13 is coupled to the first tank 10 so as to heat the first fluid accommodated in a bottom portion 35 of the first tank 10. Boiler 14 is instead coupled to the first tank so as to heat the first fluid arranged in a top portion 36 of the first tank 10. Thereby, boiler 14 acts on the first fluid already partly heated by the solar installation 13. The heat pump 15 is coupled to the first tank 10 so as to heat the first fluid accommodated in an intermediate portion 37 of the first tank 10 arranged between the bottom portion 35 and the top portion 36.

Plant 400 comprises a heat exchanger unit 405 configured to transfer thermal energy from the first fluid of the first tank 10 to the sanitary water of the sanitary plant 2. In particular, the heat exchanger unit 405 comprises a heat exchanger and a pump (not shown in the accompanying figures) configured to supply the first fluid to the heat exchanger. The pump is preferably of modulating type to ensure the temperature desired. A variant provides the presence of a mixer valve.

Preferably, the heat exchanger is of the plate type.

Plant 400 is further provided with an air-conditioning circuit 416, which connects the first tank 10 and the second tank 11 to the air-conditioning plant 3.

In particular, the air-conditioning circuit 416 connects the first tank 10 to the high temperature portion 401 and to the low temperature portion 402 of the air-conditioning plant 3, and the second tank 11 to the low temperature portion 402 alone of the air-conditioning plant 3.

In detail, the air-conditioning circuit 416 comprises a high temperature delivery line 417, which connects tank 10 and boiler 14 to the high temperature portion 401 of the air-conditioning plant 3, and a high temperature return line 418, which connects the high temperature portion 401 of the air-conditioning plant 3 to tank 10 and boiler 14.

The high temperature delivery line 417 comprises a pump 419 configured to draw the fluid to be sent to the high temperature portion 401, while the high temperature return line 418 comprises a valve 420 configured to regulate the flow rate of fluid returning from the high temperature portion 401.

Pump 419 and valve 420 are controlled by the control unit 17, as will be seen in detail below.

The air-conditioning circuit 416 further comprises a low temperature delivery line 422, which connects tank 10 and the heat pump 15 to the low temperature portion 402 of the air-conditioning plant 3, and a low temperature return line 423, which connects the low temperature portion 401 of the air-conditioning plant 3 to tank 10 and the heat pump 15.

In particular, the low temperature delivery line 422 comprises a first delivery branch 425 supplied with the fluid provided by the first tank 10 and a second delivery branch 426 supplied with the fluid provided by the heat pump 15. The first delivery branch 425 and the second delivery branch 426 join in a main delivery conduit 427, which supplies the low temperature portion 401.

The first delivery branch 425 is provided with a delivery valve 428, which is regulated by the control unit 17. The second delivery branch 426 is connected with the second tank 11. In particular, the second delivery branch 426 is connected to the second tank 11 by means of a connecting conduit 429 provided with a connecting valve 430 controlled by the control unit 17.

Similarly, the low temperature return line 423 comprises a first return branch 432, which supplies the first tank 10, and a second return branch 433, which supplies the heat pump 15. The first return branch 432 and the second return branch 433 are supplied by a main return conduit 434, which draws the fluid from the low temperature portion 401.

The first return branch 432 is provided with a return valve 436, which is regulated by the control unit 17.

The second return branch 433 connects the low temperature portion 402 to the heat pump 15 and is connected to the second tank 11 by means of a connecting conduit 437.

The air-conditioning circuit 416 further comprises a direct supplying circuit 440, which comprises a delivery line 441, which directly connects boiler 14 to the low temperature portion 402, and a return line 442, which connects the low temperature portion 402 to boiler 14. The delivery line 441 comprises a delivery valve 443, which, under the control of the control unit, regulates the flow rate of hot fluid provided by boiler 14 and to be supplied to the low temperature portion 402. The return line 442 comprises a return valve 444, which, under the control of the control unit 17, regulates the flow rate of cold fluid provided by the low temperature portion 402 and directed at boiler 14.

The solar installation 13 is substantially identical to the solar installation shown in figures 1 and 2, and comprises a solar panel 27 (figures 1 and 2) configured to heat the fluid contained therein.

In the embodiment of plant 400 herein described, the solar installation 13 supplies the heated fluid to a coil 445 immersed in the first tank 10.

The fluid heated by the solar panel 27 is supplied to coil 445 only when the difference in temperature between the temperature of the bottom of tank 10 (detected by probe 39 shown in figures 1 and 2) and the temperature detected by a probe in the solar panel 27 (not shown in the accompanying figures) is greater than a preset threshold value.

If the difference is greater than such a threshold, pump 30 (figures 1 and 2) is activated and the heated fluid is supplied to coil 445.

Similarly to that described for plant 1, the heat pump 15 may operate in two modes under the control of the control unit 17: a heating mode and a cooling mode.

If the heat pump 15 operates in heating mode, there are two possible operating modes of plant 400, which can be selected by means of the control unit 17.

The first operating mode provides for the heat pump 15 to supply the low temperature portion 402 of the air-conditioning plant 3 through the second delivery branch 426 and to receive the cold fluid from the low temperature portion 402 through the second return conduit 433. Should the flow rate of fluid supplied to the low temperature portion 402 exceed the flow rate requested by the air-conditioning plant 3, the hot fluid provided by the heat pump is stored in the first tank 10 to contribute to heating the first fluid. Obviously, such a solution is obtained if the connecting valve 430 is closed and the delivery valve 428 is open.

The second operating mode provides opening the connecting valve 430 and closing the delivery valve 428.

Thereby, the excess hot fluid generated by the heat pump 15 is stored in the second tank 11.

When the heat pump 15 operates in cooling mode, the low temperature portion 402 of the air-conditioning plant 3 receives the cold fluid provided by the heat pump 15 through the second delivery branch 426. The fluid heated in the low temperature portion 402 of the air-conditioning plant 3 is then sent through the second return conduit 433 to the heat pump 15. Should the flow rate of cold fluid supplied to the low temperature portion 402 exceed the flow rate requested by the air-conditioning plant 3, the cold fluid provided by the heat pump is stored in the second tank 11.

Plant 400 may be further operated according to three further different operating modes, under the control of the control unit 17.

The first further operating mode provides for boiler 14 to supply hot fluid to the first tank 10 alone. In such a mode, pump 419 is not activated and the auxiliary delivery valve 443 and the auxiliary return valve 444 of the auxiliary low temperature circuit are entirely closed.

The second further operating mode provides for boiler 14 to supply the high temperature portion 401 to the air-conditioning circuit 416. In such a mode, pump 419 is activated and valve 420 is open. Should the flow rate of hot fluid supplied by boiler 14 exceed the flow rate requested by the high temperature portion 401 of the air-conditioning plant 3, the excess hot fluid is supplied to the first tank 10 to contribute to heating the first fluid.

The third further operating mode provides for boiler 14 to supply the low temperature portion by means of the direct supplying circuit 440. In such a mode, the auxiliary delivery valve 443 and the auxiliary return valve 444 of the direct supplying circuit 440 are open and regulated by the control unit 17.

Should the flow rate of hot fluid supplied by boiler 14 exceed the flow rate requested by the low temperature portion 402 of the air-conditioning plant 3, the excess hot fluid is supplied to the first tank 10 to contribute to heating the first fluid (if the delivery valve 428 and the return valve 436 are open and the connecting valve 430 is closed) or it is stored in the second tank 11 (if the delivery valve 428 and the return valve 436 are closed and the connecting valve 430 is open).

Should the solar and/or storage conditions allow it, the low temperature portion 402 and the high temperature portion 401 may be supplied directly by the first tank 10 and by the second tank 11 without activating boiler 14 or the heat pump 15.

Plant 400 preferably comprises a containment structure (not shown in the accompanying drawings), which contains all the above-described components of plant 400.

Advantageously, plant 400 comprises a second smaller tank. This allows the overall volumes of the plant to be reduced and a relatively compact containment structure to be made.

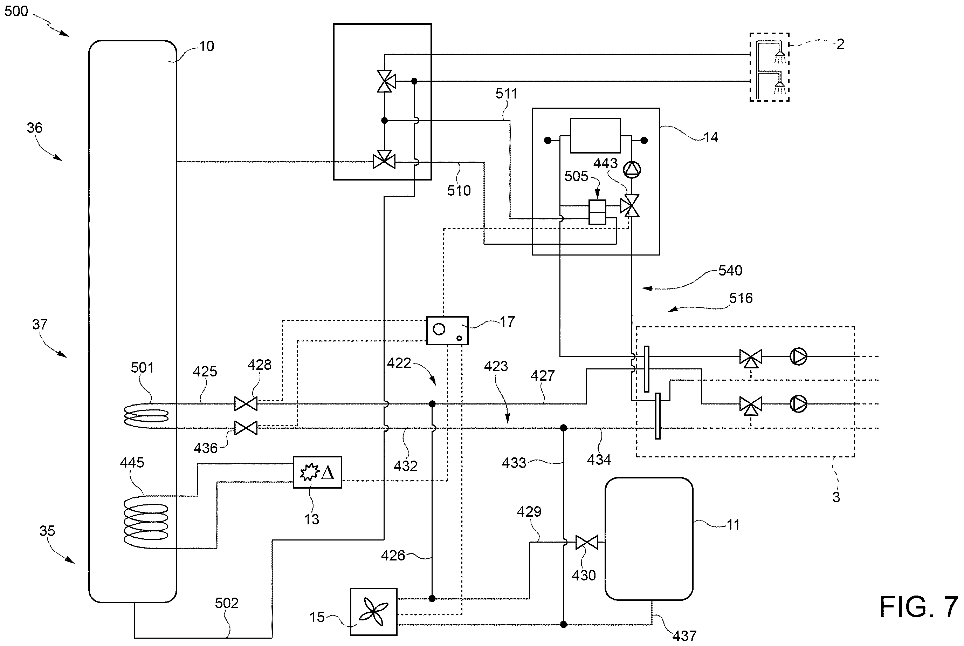

Figure 7 diagrammatically illustrates a thermal integrated multi-source plant 500 in accordance with a sixth embodiment of the present invention.

The same numbers used in figure 6 are used hereinafter to indicate similar parts.

Plant 500 differs from plant 400 substantially in that the air-conditioning circuit 516 does not supply the hot fluid directly to the first tank 10, rather supplies a coil 501 immersed in the first tank 10.

In particular, the fluid that circulates in coil 501 is provided by the low temperature return line 423, which is supplied by the heat pump 15 and by the low temperature portion 402 of the air-conditioning plant 3.

The air-conditioning circuit 516 further comprises a direct supplying circuit 540, substantially identical to the circuit of the direct supplying circuit 440 of plant 400 and configured to connect boiler 14 to the air-conditioning plant 3.

Thereby, it is possible to store primary water in the first tank 10. The term primary water means water which may be supplied to the sanitary plant 2 without undergoing further treatments.

The primary cold water is supplied to the first tank 10 by means of a supplying line 502.

The storage of primary water in the first tank 10 avoids employing a heat exchange unit for heating the water to be supplied to the sanitary plant 2. In plant 500, the water stored in the first tank is indeed supplied directly to the sanitary plant 2.

In such a configuration, the heating of the primary water may be further integrated with heating by boiler 14 provided with a plate exchanger 505 (shown diagrammatically).

Boiler 14 of plant 500 is provided with a drawing line 510 and a supplying line 511. The drawing line 510 draws the primary water provided by the first tank 10 and supplies it to the heat exchanger 505 to raise the temperature of the primary water up to the temperature level desired. The supplying line 511 supplies the primary water heated in the heat exchanger 505 to the sanitary water plant 2.

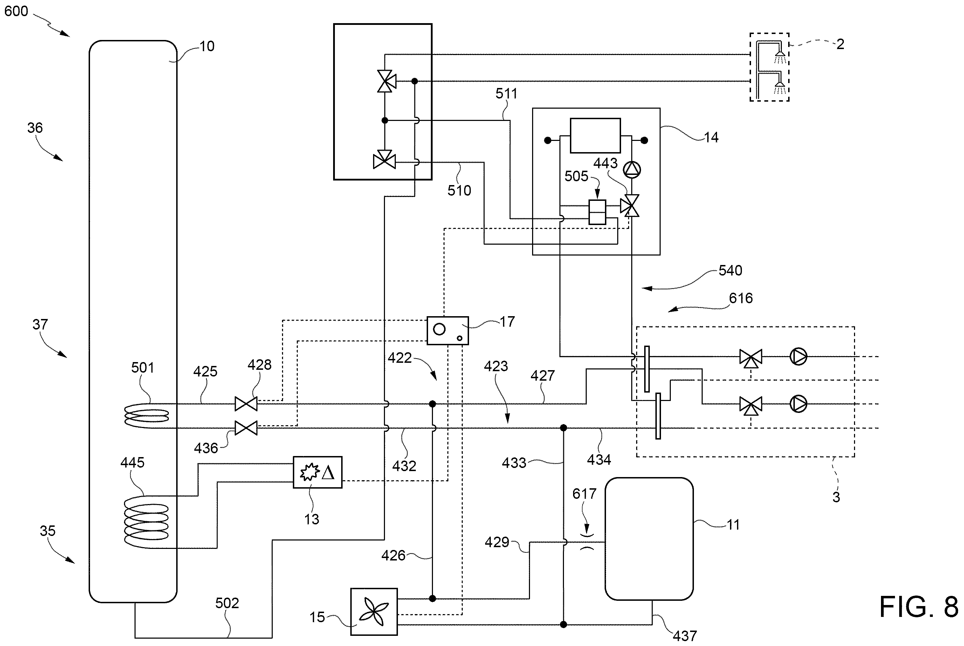

Figure 8 diagrammatically illustrates a thermal integrated multi-source plant 600 in accordance with a seventh embodiment of the present invention.

The same numbers used in figure 6 are used hereinafter to indicate similar parts.

Plant 600 differs from plant 500 substantially in that it comprises an air-conditioning circuit 616 with a delivery branch 426 and a return branch 433, which are respectively provided with a calibrated bottleneck 617.

The calibrated bottleneck 617 determines a sufficient localized loss of load to ensure that the second tank 11 is not supplied when the air-conditioning plant 3 is supplied.

The calibrated bottleneck 617 further ensures that a minimum flow rate circulates for the operation of the heat pump 15 also when the air-conditioning plant 3 is partly or completely closed.

Thereby, when the heat pump 15 generates excess hot or cold fluid, the second tank 11 takes on the function of by-pass.

In such a configuration, the heat pump 15 is a one-piece type heat pump, but such a principle also applies to "split" type heat pumps.

Advantageously, plant 600 has a simplified hydraulic circuit with respect to the plants described above.
A variant of the plants 1, 100, 200, 300, 400, 500, 600 in accordance with the present invention provides for the antifreeze function of the heat pump 15, normally obtained through electric resistances or by drawing heat from the environment, to be realized by means of an antifreeze circuit configured to draw hot fluid from the first tank 10 and/or from the second tank 11, 101, 102 and/or from the solar installation 13 and/or from boiler 14 to defrost the second source 15. Thereby, it is possible to prevent the heat pump 15 from freezing during the winter period. Advantageously, the thermal resources available are used to heat the second thermal source, thus minimizing consumptions and the times required to restore the heat pump.

A variant (not shown) of plants 1, 100, 200, 300, 400, 500, 600 in accordance with the present invention provides for the first tank 10 to be connected to further thermal sources different from those described above and capable of heating the first fluid. For example, the first tank 10 could be connected to a biomass boiler, with one or more internal or external combustion engines or to a heat pump configured to heat the first fluid (high temperature heat pump) and connected directly to the first tank. A variant (not shown) also provides for a direct heat burner with combustion chamber immersed in the first tank.

Advantageously, the thermal integrated multi-source plants 1, 100, 200, 300, 400, 500, 600 according to the present invention are characterized by reduced volumes with respect to known thermal integrated multi-source plants. The thermal integrated multi-source plants 1, 100, 200, 300, 400, 500, 600 according to the present invention are not very cumbersome. Due to this, all components in the plant may be enclosed in a single casing, with apparent advantages in terms of appearance and logistics.
Finally, it is apparent that modifications and variants may be made to the plant and the method herein described without departing from the scope of the accompanying claims.

## Claims

1. Thermal integrated multi source plant (1; 100; 200; 300; 400; 500; 600) comprising: a control unit (17); a first tank (10) configured to store a first fluid; at least a first thermal source (13) associated to the first tank (10) and configured to heat the first fluid; at least a second tank (11; 101, 102) configured to store a second fluid; at least a second thermal source (15) associated at least to the second tank (11; 101, 102) and configured to operate in two alternative modes on the basis of a control signal produced by the control unit (17): a heating mode according to which the second fluid is heated and a cooling mode according to which the second fluid is cooled ; an air-conditioning circuit (16; 116, 216; 316; 416; 516), which connects the second tank (11) and/or the first tank (10) to an air-conditioning plant (3) and is provided with first regulating means (55; 109; 223; 305; 428, 430) configured to selectively supply the second fluid and/or the first fluid to the air-conditioning plant (3); the first regulating means (55; 109; 223; 305; 428, 430) being controlled by the control unit (17).

2. Plant according to claim 1, wherein the air-conditioning circuit (16; 116, 216; 316; 416; 516) comprises at least second regulating means (61; 112; 224; 436) controlled by the control unit (17) and configured to selectively supply the fluid provided by the air-conditioning plant (3) to the first tank (10) and/or to the second tank (11; 101, 102).

3. Plant according to anyone of the foregoing claims, comprising a first heat exchanger (12) configured to transfer thermal energy from the first fluid to the sanitary water of a sanitary plant (2).

4. Plant according to anyone of the foregoing claims, comprising a connecting circuit (34; 120) which is provided with at least a delivery conduit (18; 121) between the second tank (11; 101, 102) and the first tank (10) having first drawing means (18a, 18b; 123) configured to selectively draw the second fluid and supply it to the first tank (10).

5. Plant according to anyone of the foregoing claims, wherein the first thermal source (13) comprises a solar panel (27).

6. Plant according to claim 5, comprising a first temperature sensor (39), configured to detect the temperature of the first fluid in a portion (35) of the first tank (10) associated to the first thermal source (13), and a solar temperature sensor located in the solar panel (27); the control unit (17) being configured to activate the first thermal source (13) when the difference between the temperature detected by the solar temperature sensor and the temperature detected by first temperature sensor (39) is greater than a first threshold value.

7. Plant according to anyone of the foregoing claims, wherein the second thermal source (15) is associated to the first tank (10) so as to heat the first fluid already heated by the first thermal source (13) when the second thermal source (15) operates in a heating mode.

8. Plant according to claim 7, comprising at least a second temperature sensor (40) arranged so as to detect the temperature of the first fluid heated by the first thermal source (13) and still not heated by the second thermal source (15); the control unit (17) being configured to activate the second thermal source (15) when the temperature detected by the second temperature sensor (40) is less than a second threshold value.

9. Plant according to anyone of the foregoing claims, wherein the second thermal source (15) comprises a heat pump.

10. Plant according to anyone of the foregoing claims, comprising at least a third thermal source (14) associated to the first tank (10) and configured to heat the first fluid.

11. Plant according to claim 10, wherein the third thermal source (14) is associated to the first tank (10) so as to heat the first fluid already heated by the first thermal source (13).

12. Plant according to claim 11, comprising at least a third temperature sensor (41) arranged so as to detect the temperature of the first fluid heated by the first thermal source (13) and not yet heated by the third thermal source (14); the control unit (17) being configured to activate the third thermal source (14) when the temperature detected by the third temperature sensor (41) is less than a third threshold value.

13. Plant according to any one of claims from 10 to 12, wherein the third thermal source (14) comprises a fossil fuel boiler.

14. Plant according to anyone of the foregoing claims, wherein the air-conditioning circuit (216; 316; 416; 516) comprises at least a first direct supplying circuit (220, 221; 302, 304; 426, 427, 433, 434), which connects the second thermal source (15) to the air-conditioning plant (3) .

15. Plant according to any one of claims from 10 to 14, wherein the air-conditioning circuit (16; 116, 216; 316; 416; 516) comprises at least a second direct supplying circuit (440; 540), which connects the third thermal source (14) to the air-conditioning plant (3).

16. Plant according to anyone of the foregoing claims, comprising an antifreeze circuit configured to draw hot fluid from the first tank (10) and/or from the second tank (11; 101, 102) and/or from the first thermal source (13) to heat the second thermal source (15).

17. Method for operating a thermal integrated multisource plant comprising a first tank (10) configured to store a first fluid; at least a first thermal source (13) configured to heat the first fluid and associated to the first tank (10); at least a second tank (11; 101, 102) configured to store a second fluid; at least a second thermal source (15) associated to at least the second tank (11; 101, 102) and configured to operate in two alternative modes on the basis of a control signal produced by the control unit (17): a heating mode according to which the second fluid is heated and a cooling mode according to which the second fluid is cooled; an air-conditioning circuit (16; 116; 216; 316; 416; 516), which connects the first tank (10) and/or the second tank (11; 101, 102) to an air-conditioning plant (3);
the method comprising the step of selectively supplying the second fluid and/or the first fluid to the air-conditioning plant (3).

18. Method according to claim 17, comprising the step of selectively supplying the fluid provided by the air-conditioning plant (3) to the first tank (10) and/or to the second tank (11; 101, 102).

19. Method according to claim 17 or 18, comprising the step of selectively supplying the second fluid to the first tank (10) by means of a connecting circuit (34; 120).

20. Method according to any one of claims from 17 to 19, comprising the steps of:
• detecting the temperature of the first fluid in a portion (35) of the first tank (10) associated to the first thermal source (13) by a first temperature sensor (39);
• detecting the temperature in the solar panel (27) by a second temperature sensor;
• activating the first thermal source (13) when the difference between the temperature detected by the second temperature sensor and the temperature detected by the first temperature sensor (39) is greater than a first threshold value.

21. Method according to any one of claims from 17 to 20, wherein the second thermal source (15) is associated to first tank (10) so as to heat the first fluid already heated by the first thermal source (13) when the second thermal source (15) operates in the heating mode.

22. Method according to claim 21, comprising the steps of:
• detecting the temperature of the first fluid heated by the first thermal source (13) and not yet heated by the second thermal source (15) by means of at least a second temperature sensor (40);
• activating the second thermal source (15) when the temperature detected by the second temperature sensor (40) is less than a second threshold value.

23. Method according to any one of claims from 17 to 22, comprising at least a third thermal source (14) associated to the first tank (10) and configured to heat the first fluid.

24. Method according to claim 23, wherein the third thermal source (14) is associated to the first tank (10) so as to heat the first fluid already heated by the first thermal source (13).

25. Method according to claim 24, comprising the steps of:
• detecting the temperature of the first fluid heated by first thermal source (13) and not yet heated by third thermal source (14) by means of at least a third temperature sensor (41);
• activating the third thermal source (14) when the temperature detected by the third temperature sensor (41) is less than a third threshold value.

26. Method according to any one of claims from 17 to 25, comprising the step of selectively supplying the fluid provided by the second thermal source (15) to the air-conditioning plant (3) by means of a first direct supplying circuit (220, 221; 302, 304; 426, 427, 433, 434).

27. Method according to any one of claims from 23 to 26, comprising the step of selectively supplying the fluid provided by the third thermal source (14) to the air-conditioning plant (3) by means of at least a second direct supplying circuit (440; 540).

28. Method according to any one of claims from 17 to 27, comprising the step of drawing hot fluid from the first tank (10) and/or from the second tank (11; 101, 102) and/or from the first thermal source (13) to heat the second thermal source (15).

## Patentansprüche

1. Anlage mit mehrfachen integrierten Wärmequellen (1; 100; 200; 300; 400; 500; 600) aufweisend: eine Steuereinheit (17); einen ersten Tank (10), der zum Speichern eines ersten Fluids ausgebildet ist; mindestens eine erste Wärmequelle (13), die mit dem ersten Tank (10) zusammenwirkt und zum Erwärmen des ersten Fluids ausgebildet ist; mindestens einen zweiten Tank (11; 101; 102), der zum Speichern eines zweiten Fluids ausgebildet ist; mindestens eine zweite Wärmequelle (15), die mit wenigstens dem zweiten Tank (11; 101; 102) zusammenwirkt und zum Betrieb in zwei unterschiedlichen Modi auf der Grundlage eines von der Steuereinheit (17) erzeugten Steuersignals ausgebildet ist: ein Erwärmungsmodus, in dem das zweite Fluid erwärmt wird und ein Kühlmodus, in dem das zweite Fluid gekühlt wird; einen Klimatisierungskreis (16; 116; 216; 316; 416; 516), der den zweiten Tank (11) und/oder den ersten Tank (10) mit einer Klimaanlage (3) verbindet und mit ersten Steuermitteln (55; 109; 223; 305; 428; 430) versehen ist, die zur selektiven Zufuhr des zweiten Fluids und/oder des ersten Fluids zu der Klimaanlage (3) ausgebildet sind; wobei die ersten Steuermittel (55; 109; 223; 305; 428; 430) von der Steuereinheit (17) gesteuert werden.

2. Anlage nach Anspruch 1, wobei der Klimatisierungs-Schaltkreis (16; 116; 216; 316; 416; 516) wenigstens zweite Steuermittel (61; 112; 224; 436) aufweist, die von der Steuereinheit (17) gesteuert werden und ausgebildet sind, um das von der Klimaanlage (3) bereitgestellte Fluid selektiv dem ersten Tank (10) und/oder dem zweiten Tank (11; 101, 102) zuzuführen.

3. Anlage nach einem der vorausgehenden Ansprüche, aufweisend einen ersten Wärmeaustauscher (12), der zum Austausch von thermischer Energie von dem ersten Fluid auf das Sanitärwasser einer Sanitäranlage (2) ausgebildet ist.

4. Anlage nach einem der vorausgehenden Ansprüche, aufweisend einen Verbindungskreis (34; 120), der mit mindestens einer Zuführleitung (18; 121) zwischen dem zweiten Tank (11; 101, 102) und dem ersten Tank (10) versehen ist, die mit ersten Abziehmitteln (18a, 18b; 123) versehen ist, die ausgebildet sind, um selektiv das zweite Fluid abzuziehen und dieses dem ersten Tank (10) zuzuführen.

5. Anlage nach einem der vorausgehenden Ansprüche, wobei die erste Wärmequelle (13) ein Solarpanel (27) aufweist.

6. Anlage nach Anspruch 5, aufweisend einen ersten Temperatursensor (39), der ausgebildet ist, um die Temperatur des ersten Fluids in einem Teil (3) des ersten Tanks (10), der mit der ersten Wärmequelle (13) zusammenwirkt, zu detektieren, und einen Solartemperatursensor, der in dem Solarpanel angeordnet ist; wobei die Steuereinheit (17) ausgebildet ist, um die erste Wärmequelle (13) zu aktivieren, wenn die Differenz zwischen der von dem Solartemperatursensor detektierten Temperatur und der von dem ersten Temperatursensor (39) detektierten Temperatur größer als ein erster Grenzwert ist.

7. Anlage nach einem der vorausgehenden Ansprüche, wobei die zweite Wärmequelle (15) mit dem ersten Tank (10) derart zusammenwirkt, dass das bereits von der ersten Wärmequelle (13) erwärmte erste Fluid erwärmt wird, wenn die zweite Wärmequelle (15) in dem Erwärmungsmodus betrieben wird.

8. Anlage nach Anspruch 7, aufweisend wenigstens einen zweiten Temperatursensor (40), der derart angeordnet ist, dass die Temperatur des von der ersten Wärmequelle (13) erwärmten und von der der zweiten Wärmequelle (15) noch nicht erwärmten ersten Fluids detektiert wird, wobei die Steuereinheit (17) derart ausgebildet ist, das die zweite Wärmequelle (15) aktiviert wird, wenn die von dem zweiten Temperatursensor (40) detektierte Temperatur kleiner als ein zweiter Grenzwert ist.

9. Anlage nach einem der vorausgehenden Ansprüche, wobei die zweite Wärmequelle (15) eine Wärmepumpe aufweist.

10. Anlage nach einem der vorausgehenden Ansprüche, aufweisend wenigstens eine dritte Wärmequelle (14), die mit dem ersten Tank (10) zusammenwirkt und zum Erwärmen des ersten Fluids ausgebildet ist.

11. Anlage nach Anspruch 10, wobei die dritte Wärmequelle (14) mit dem ersten Tank (10) derart zusammenwirkt, dass das bereits von der ersten Wärmequelle (13) erwärmte erste Fluid erwärmt wird.

12. Anlage nach Anspruch 11, aufweisend wenigstens einen dritten Temperatursensor (41), der angeordnet ist, um die Temperatur des von der ersten Wärmequelle (13) erwärmten und von der dritten Wärmequelle (14) noch nicht erwärmten ersten Fluids zu detektieren; wobei die Steuereinheit (17) ausgebildet ist, um die dritte Wärmequelle (14) zu aktivieren, wenn die von dem dritten Temperatursensor (41) detektierte Temperatur kleiner als ein dritter Grenzwert ist.

13. Anlage nach einem der Ansprüche 10 bis 12, wobei die dritte Wärmequelle (14) einen Boiler für fossile Brennstoffe aufweist.

14. Anlage nach einem der vorausgehenden Ansprüche, wobei der Klimatisierungskreis (216; 316; 416; 516) wenigstens einen ersten Zufuhrkreis für eine direkte Zufuhr (220; 302, 304; 426, 427, 433, 434), der die zweite Wärmequelle (15) mit der Klimaanlage (3) verbindet, aufweist.

15. Anlage nach einem der Ansprüche 10 bis 14, wobei der Klimatisierungskreis (16; 116, 216; 316; 416; 516) wenigstens einen zweiten Zufuhrkreis für eine direkte Zufuhr (440; 540), der die dritte Wärmequelle (14) mit der Klimaanlage (3) verbindet, aufweist.

16. Anlage nach einem der vorausgehenden Ansprüche, aufweisend einen Frostschutzkreis, der ausgebildet ist, um warmes Fluid von dem ersten Tank (10) und/oder von dem zweiten Tank (11; 101, 102) und/oder von der ersten Wärmequelle (13) abzuziehen, um die zweite Wärmequelle (15) zu erwärmen.

17. Verfahren zum Betrieb einer Anlage mit mehrfach integrierten Wärmequellen aufweisend einen ersten Tank (10), der zum Speichern eines ersten Fluids ausgebildet ist; wenigstens eine erste Wärmequelle (13), die zum Erwärmen des ersten Fluids ausgebildet ist und mit dem ersten Tank (10) zusammenwirkt; mindestens einen zweiten Tank (11; 101; 102), der zum Speichern eines zweiten Fluids ausgebildet ist; mindestens eine zweite Wärmequelle (15), die wenigstens mit dem zweiten Tank (11; 101; 102) zusammenwirkt und zum Betrieb in zwei unterschiedlichen Modi auf der Grundlage eines von einer Steuereinheit erzeugten Steuersignals ausgebildet ist: ein Erwärmungsmodus, in dem das zweite Fluid erwärmt wird und ein Kühlmodus, in dem das zweite Fluid gekühlt wird; einen Klimatisierungskreis (16; 116; 216; 316; 416; 516), der den zweiten Tank (11) und/oder den ersten Tank (10) mit einer Klimaanlage (3) verbindet;
wobei das Verfahren den Schritt der selektiven Zufuhr des zweiten Fluids und/oder des ersten Fluids zu der Klimaanlage (3) aufweist.

18. Verfahren nach Anspruch 17, aufweisend den Schritt der selektiven Zufuhr des von der Klimaanlage (3) bereitgestellten Fluids zu dem ersten Tank (10) und/oder zu dem zweiten Tank (11; 101, 102).

19. Verfahren nach Anspruch 17 oder 18, aufweisend den Schritt der selektiven Zufuhr des zweiten Fluids zu dem ersten Tank (10) mittels eines Verbindungskreises (34; 120).

20. Verfahren nach einem der Ansprüche 17 bis 19, aufweisend folgende Schritte:
- Detektieren der Temperatur des ersten Fluids in einem Teil (35) des mit der ersten Wärmequelle (13) zusammenwirkenden ersten Tanks (10) durch einen ersten Temperatursensor (39);
- Detektieren der Temperatur in dem Solarpanel (27) durch einen zweiten Temperatursensor;
- Aktivieren der ersten Wärmequelle (13), wenn die Differenz zwischen der von dem zweiten Temperatursensor detektierten Temperatur und der von dem ersten Temperatursensor detektierten Temperatur größer als ein erster Grenzwert ist.

21. Verfahren nach einem der Ansprüche 17 bis 20, wobei die zweite Wärmequelle (15) mit dem ersten Tank (10) derart zusammenwirkt, dass das bereits durch die erste Wärmequelle (13) erwärmte erste Fluid erwärmt wird, wenn die zweite Wärmequelle (15) in dem Erwärmungsmodus betrieben wird.

22. Verfahren nach Anspruch 21, aufweisend die folgenden Schritte:
- Detektieren der Temperatur des von der ersten Wärmequelle (13) und noch nicht von der zweiten Wärmequelle (15) erwärmten ersten Fluids mittels wenigstens eines zweiten Temperatursensors (40);
- Aktivieren der zweiten Wärmequelle (15), wenn die von dem zweiten Temperatursensor (40) detektierte Temperatur kleiner als ein zweiter Grenzwert ist.

23. Verfahren nach einem der Ansprüche 17 bis 22, aufweisend wenigstens eine dritte Wärmequelle (14), die mit dem ersten Tank (10) zusammenwirkt und zum Erwärmen des ersten Fluids ausgebildet ist:

24. Verfahren nach Anspruch 23, wobei die dritte Wärmequelle (14) mit dem ersten Tank (10) derart zusammenwirkt, dass das bereits von der ersten Wärmequelle (13) erwärmte erste Fluid erwärmt wird.

25. Verfahren nach Anspruch 24, aufweisend die folgenden Schritte:
- Detektieren der Temperatur des von der ersten Wärmequelle (13) und noch nicht von der dritten Wärmequelle (14) erwärmten ersten Fluids mittels wenigstens eines dritten Temperatursensors (41);
- Aktivieren der dritten Wärmequelle (14), wenn die von dem dritten Temperatursensor (41) detektierte Temperatur kleiner als ein dritter Grenzwert ist.

26. Verfahren nach einem der Ansprüche 17 bis 25, aufweisend den Schritt der selektiven Zufuhr des von der zweiten Wärmequelle (15) bereitgestellten Fluids zu der Klimaanlage (3) mittels eines ersten Zufuhrkreises für eine direkte Zufuhr (220, 221; 302, 304; 426, 427, 433, 434).

27. Verfahren nach einem der Ansprüche 23 bis 26, aufweisend den Schritt der selektiven Zufuhr des von der dritten Wärmequelle (14) bereitgestellten Fluids zu der Klimaanlage (3) mittels wenigstens eines zweiten Zufuhrkreises für eine direkte Zufuhr (440; 540).

28. Verfahren nach einem der Ansprüche 17 bis 27, aufweisend den Schritt des Abziehens von warmen Fluid von dem ersten Tank (10) und/oder dem zweiten Tank (11; 101, 102) und/oder von der ersten Wärmequelle (13), um die zweite Wärmequelle (15) zu erwärmen.

## Revendications

1. Installation à multiples sources thermiques intégrées (1 ; 100 ; 200 ; 300 ; 400 ; 500 ; 600) comprenant : une unité de commande (17) ; un premier réservoir (10) configuré pour stocker un premier fluide ; au moins une première source thermique (13) associée au premier réservoir (10) et configurée pour chauffer le premier fluide ; au moins un deuxième réservoir (11 ; 101, 102) configuré pour stocker un deuxième fluide ; au moins une deuxième source thermique (15) associée au moins au deuxième réservoir (11 ; 101, 102) et configurée pour fonctionner dans deux modes alternatifs sur la base d'un signal de commande produit par l'unité de commande (17) : un mode chauffage selon lequel le deuxième fluide est chauffé et un mode refroidissement selon lequel le deuxième fluide est refroidi ; un circuit de climatisation (16 ; 116, 216 ; 316 ; 416 ; 516), qui raccorde le deuxième réservoir (11) et/ou le premier réservoir (10) à une installation de climatisation (3) et est pourvu d'un premier moyen de régulation (55 ; 109 ; 223 ; 305 ; 428, 430) configuré pour apporter sélectivement le deuxième fluide et/ou le premier fluide à l'installation de climatisation (3) ; le premier moyen de régulation (55 ; 109 ; 223 ; 305 ; 428, 430) étant commandé par l'unité de commande (17).

2. Installation selon la revendication 1, dans lequel 1, dans laquelle le circuit de climatisation (16 ; 116, 216 ; 316 ; 416 ; 516) comprend au moins un deuxième moyen de régulation (61 ; 112 ; 224 ; 436) commandé par l'unité de commande (17) et configuré pour apporter sélectivement le fluide fourni par l'installation de climatisation (3) au premier réservoir (10) et/ou au deuxième réservoir (11 ; 101, 102).

3. Installation selon l'une quelconque des revendications précédentes, comprenant un premier échangeur de chaleur (12) configuré pour transférer l'énergie thermique depuis le premier fluide à l'eau sanitaire d'une installation sanitaire (2).

4. Installation selon l'une quelconque des revendications précédentes, comprenant un circuit de raccordement (34 ; 120) qui est pourvu d'au moins un conduit d'acheminement (18 ; 121) entre le deuxième réservoir (11 ; 101, 102) et le premier réservoir (10) comportant un premier moyen d'aspiration (18a, 18b ; 123) configuré pour aspirer sélectivement le deuxième fluide et l'apporter au premier réservoir (10).

5. Installation selon l'une quelconque des revendications précédentes, dans lequel la première source thermique (13) comprend un panneau solaire (27).

6. Installation selon la revendication 5, comprenant un premier capteur de température (39), configuré pour détecter la température du premier fluide dans une partie (35) du premier réservoir (10) associé à la première source thermique (13), et un capteur de température solaire situé dans le panneau solaire (27) ; l'unité de commande (17) étant configurée pour activer la première source thermique (13) quand la différence entre la température détectée par le capteur de température solaire et la température détectée par le premier capteur de température (39) est supérieure à une première valeur seuil.

7. Installation selon l'une quelconque des revendications précédentes, dans laquelle la deuxième source thermique (15) est associée au premier réservoir (10) de manière à chauffer le premier fluide déjà chauffé par la première source thermique (13) quand la deuxième source thermique (15) fonctionne dans un mode chauffage.

8. Installation selon la revendication 7, comprenant au moins un deuxième capteur de température (40) agencé de manière à détecter la température du premier fluide chauffé par la première source thermique (13) et toujours pas chauffé par la deuxième source thermique (15) ; l'unité de commande (17) étant configurée pour activer la deuxième source thermique (15) quand la température détectée par le deuxième capteur de température (40) est inférieure à une deuxième valeur seuil.

9. Installation selon l'une quelconque des revendications précédentes, dans laquelle la deuxième source thermique (15) comprend une pompe à chaleur.

10. Installation selon l'une quelconque des revendications précédentes, comprenant au moins une troisième source thermique (14) associée au premier réservoir (10) et configurée pour chauffer le premier fluide.

11. Installation selon la revendication 10, dans laquelle la troisième source thermique (14) est associée au premier réservoir (10) de manière à chauffer le premier fluide déjà chauffé par la première source thermique (13).

12. Installation selon la revendication 11, comprenant au moins un troisième capteur de température (41) agencé de manière à détecter la température du premier fluide chauffé par la première source thermique (13) et pas encore chauffé par la troisième source thermique (14) ; l'unité de commande (17) étant configurée pour activer la troisième source thermique (14) quand la température détectée par le troisième capteur de température (41) est inférieure à une troisième valeur seuil.

13. Installation selon l'une quelconque des revendications 10 à 12, dans laquelle la troisième source thermique (14) comprend une chaudière à combustible fossile.

14. Installation selon l'une quelconque des revendications précédentes, dans laquelle le circuit de climatisation (216 ; 316 ; 416 ; 516) comprend au moins un premier circuit d'alimentation directe (220, 221 ; 302, 304 ; 426, 427, 433, 434), qui raccorde la deuxième source thermique (15) à l'installation de climatisation (3).

15. Installation selon l'une quelconque des revendications 10 à 14, dans laquelle le circuit de climatisation (16 ; 116 ; 216 ; 316 ; 416 ; 516) comprend au moins un deuxième circuit d'alimentation directe (440 ; 540), qui raccorde la troisième source thermique (14) à l'installation de climatisation (3).

16. Installation selon l'une quelconque des revendications précédentes, comprenant un circuit antigivre configuré pour aspirer du fluide chaud depuis le premier réservoir (10) et/ou depuis le deuxième réservoir (11 ; 101, 102) et/ou depuis la première source thermique (13) pour chauffer la deuxième source thermique (15).

17. Procédé pour faire fonctionner une installation à multiples sources thermiques intégrées comprenant un premier réservoir (10), configuré pour stocker un premier fluide ; au moins une première source thermique (13) configurée pour chauffer le premier fluide et associée au premier réservoir (10) ; au moins un deuxième réservoir (11 ; 101, 102) configuré pour stocker un deuxième fluide ; au moins une deuxième source thermique (15) associée au moins au deuxième réservoir (11 ; 101, 102) et configurée pour fonctionner dans deux modes alternatif sur la base d'un signal de commande produit par l'unité de commande (17) : un mode chauffage selon lequel le deuxième fluide est chauffé et un mode refroidissement selon lequel le deuxième fluide est refroidi ; un circuit de climatisation (16 ; 116, 216 ; 316 ; 416 ; 516), qui raccorde le premier réservoir (10) et/ou le deuxième réservoir (11 ; 101, 102) à une installation de climatisation (3) ;
le procédé comprenant l'étape d'apport sélectif du deuxième fluide et/ou du premier fluide à l'installation de climatisation (3).

18. Procédé selon la revendication 17, comprenant l'étape d'apport sélectif du fluide fourni par l'installation de climatisation (3) au premier réservoir (10) et/ou au deuxième réservoir (11 ; 101, 102) .

19. Procédé selon la revendication 17 ou 18, comprenant l'étape d'apport sélectif du deuxième fluide au premier réservoir (10) au moyen d'un circuit de raccordement (34 ; 120).

20. Procédé selon l'une quelconque des revendications 17 à 19, comprenant les étapes de :
• détection de la température du premier fluide dans une partie (35) du premier réservoir (10) associé à la première source thermique (13) par un premier capteur de température (39) ;
• détection de la température dans le panneau solaire (27) par un deuxième capteur de température ;
• activation de la première source thermique (13) quand la différence entre la température détectée par le deuxième capteur de température et la température détectée par le premier capteur de température (39) est supérieure à une première valeur seuil.

21. Procédé selon l'une quelconque des revendications 17 à 20, dans lequel la deuxième source thermique (15) est associée au premier réservoir (10) de manière à chauffer le premier fluide déjà chauffé par la première source thermique (13) quand la deuxième source thermique (15) fonctionne dans le mode chauffage.

22. Procédé selon la revendication 21, comprenant les étapes de :
• détection de la température du premier fluide chauffé par la première source thermique (13) et pas encore chauffé par la deuxième source thermique (15) au moyen d'au moins un deuxième capteur de température (40) ;
• activation de la deuxième source thermique (15) quand la température détectée par le deuxième capteur de température (40) est inférieure à une deuxième valeur seuil.

23. Procédé selon l'une quelconque des revendications 17 à 22, comprenant au moins une troisième source thermique (14) associée au premier réservoir (10) et configurée pour chauffer le premier fluide.

24. Procédé selon la revendication 23, dans lequel la troisième source thermique (14) est associée au premier réservoir (10) de manière à chauffer le premier fluide déjà chauffé par la première source thermique (13).

25. Procédé selon la revendication 24, comprenant les étapes de :
• détection de la température du premier fluide chauffé par la première source thermique (13) et pas encore chauffé par la troisième source thermique (14) au moyen d'au moins un troisième capteur de température (41) ;
• activation de la troisième source thermique (14) quand la température détectée par le troisième capteur de température (41) est inférieure à une troisième valeur seuil.

26. Procédé selon l'une quelconque des revendications 17 à 25, comprenant l'étape d'apport sélectif du fluide fourni par la deuxième source thermique (15) à l'installation de climatisation (3) au moyen d'un premier circuit d'alimentation directe (220, 221 ; 302, 304 ; 426, 427, 433, 434).

27. Procédé selon l'une quelconque des revendications 23 à 26, comprenant l'étape d'apport sélectif du fluide fourni par la troisième source thermique (14) à l'installation de climatisation (3) au moyen d'au moins un deuxième circuit d'alimentation directe (440 ; 540).

28. Procédé selon l'une quelconque des revendications 17 à 27, comprenant l'étape d'aspiration de fluide chaud depuis le premier réservoir (10) et/ou depuis le deuxième réservoir (11 ; 101, 102) et/ou depuis la première source thermique (13) pour chauffer la deuxième source thermique (15).
